# EUROPÄISCHE PATENTSCHRIFT

(11) **EP 0 607 605 B1**
(45) Veröffentlichungstag und Bekanntmachung des Hinweises auf die Patenterteilung: **16.07.1997**
(21) Anmeldenummer: 93120799.7
(22) Anmeldetag: 23.12.1993
(51) Int. Cl.: G01V 3/11

(54) **Ringförmige Sonde für ein Metallsuchgerät**
Annular sonde for a metal detector
Sonde annulaire pour un détecteur de métal

(30) Priorität: 21.01.1993 DE 9300788 U
(43) Veröffentlichungstag der Anmeldung: 27.07.1994
(73) Patentinhaber: Ebinger, Klaus, D-51149 Köln (DE)
(72) Erfinder: Ebinger, Klaus, D-51149 Köln (DE)
(74) Vertreter: Heim, Hans-Karl, Dipl.-Ing.

(56) Entgegenhaltungen:
- DE-C- 3 619 308
- DE-U- 8 811 496
- FR-A- 960 966
- FR-A- 2 632 422

## Beschreibung

Die Erfindung betrifft eine ringförmige Sonde für ein Metallsuchgerät gemäß Oberbegriff des Anspruchs 1.

Eine derartige gattungsgemäße Sonde ist z. B. aus der DE 36 19 308 C1 bekannt. Bei dieser bekannten Sonde werden mindestens zwei Empfängerspulen in platzsparender Weise innerhalb einer kreisförmigen Senderspule angeordnet. Das kreisförmige Sondengehäuse wird durch Stege in mehrere Abschnitte unterteilt, wobei die Empfängerspulen teilweise in den Stegen liegen. Durch diese Spulenanordnung und ein elektrisches Gegeneinanderschalten der Empfängerspulen können störende bodenmagnetische Effekte, wie sie zum Beispiel bei stark mineralisiertem Erdboden auftreten, bereits weitgehend ausgeschaltet bzw. vermindert werden.

Der Ortungsreichweite sowie der Eliminierung von Störsignalen sind bei dieser bekannten Sonde jedoch Grenzen gesetzt. Die Empfangsqualität der Sonde könnte daher noch verbessert werden. Das enge Nebeneinanderliegen der Empfängerspulen vermindert die Differenzwirkung und reduziert die Empfindlichkeit. Die Plazierung der Empfängerspulen ist ebenfalls nicht optimiert, um störende Bodeneffekte beim Suchen auszublenden.

Eine weitere ringförmige Sonde für Metallsuchgeräte ist z. B. aus der DE-U-88 11 496.1 bekannt. Bei dieser bekannten Detektorsonde ist das ringförmige Gehäuse nahezu oval mit abgeflachten geraden Stirnseiten ausgebildet. Diese Ausformung wurde bei der bekannten Sonde gewählt, um beim Einsatz des Metallsuchgerätes in schwierigem Gelände, insbesondere bei hohem Grasbewuchs, die Handhabung zu erleichtern. Es wird erwähnt, daß drei Spulen eingelegt werden können, wobei ein Nachteil darin liegt, daß die großen Außenbögen der Sonde bei Stoß zu Schwingungen neigen. Diese mechanische Instabilität kann zu einer störenden Modulation des Empfangssignals führen.

Weiterhin ist aus der FR-A-2 632 422 eine Detektionseinrichtung mit einer im wesentlichen rechteckigen Spulenform bekannt. Diese Detektionseinrichtung ist für einen stationären Betrieb vorgesehen, beispielsweise an Rohren zur Durchflußmessung oder an Durchgängen zur Metalldetektion bei Personen. Die FR-A-960 966 betrifft eine Spulenanordnung in einer Platte eines Metallsuchgerätes, bei dem sowohl die Sondenspule und zwei Empfangsspulen eine längliche Form aufweisen.

Der Erfindung liegt die **Aufgabe** zugrunde, eine gattungsgemäße Sonde so weiterzubilden, daß bei guten Stabilitätseigenschaften der Sonde eine hohe Ortungsempfindlichkeit beim Auffinden von in unterschiedlichsten Geländebereichen befindlichen Gegenständen erreicht wird.

Diese Aufgabe wird bei der gattungsgemäßen Sonde erfindungsgemäß durch die im kennzeichnenden Teil des Anspruchs 1 angegebenen Merkmale gelöst.

Vorteilhafte Ausgestaltungen sind in den abhängigen Ansprüchen angegeben.

Erfindungsgemäß wird die Empfindlichkeit, Stabilität und Störunterdrückung der Sonde für ein Metallsuchgerät auf mehrfache Weise erhöht. Zunächst wird die Differenzwirkung der Nebenspulen dadurch erhöht, daß deren Spulenzentren in einem größeren Abstand zueinander angeordnet werden. Zum anderen wird die Empfangsqualität der einzelnen Nebenspulen dadurch verbessert, indem deren Spulenform möglichst kreisringförmig ausgebildet oder einem Kreisring angenähert wird. Dies berücksichtigt den Umstand, daß langgezogene, schmale Empfangsspulen durch die Gegeninduktivität der Wicklungsstränge eine sehr schlechte Empfangsqualität aufweisen.

Eine Optimierung der Nebenspulen in einer ringförmigen Sonde wird dadurch erreicht, daß man von der bisherigen Kreisform der Sonde abgeht und diese als länglichen Ringkörper mit einer mittigen Längsachse ausbildet, wobei der Durchmesser in Längsrichtung der maximale Durchmesser der ringförmigen Sonde ist. Die beiden Stirnseiten der Sonde in Längsrichtung sind dabei als Bogensegmente ausgebildet, deren Scheitelpunkte auf der Längsachse liegen. Zwei Nebenspulen liegen sich in Längsrichtung der Sonde gegenüber, wobei die Nebenspulen mit einem Spulenbereich im Ringkörper der Sonde und mit einem anderen Spulenbereich in einem Steg angeordnet sind. Dieser Steg ist vorzugsweise quer zur Längsrichtung als Verbindungssteg des Ringkörpers vorgesehen. Die Längsseitenbereiche, welche zwischen den als Bogensegmente ausgebildeten Stirnseiten liegen, sind im wesentlichen symmetrisch zur Längsachse ausgebildet.

Bei der vorteilhaften Gestaltung mit einer vorderen und einer rückwärtigen Nebenspule können diese auch eine weitgehend übereinstimmende Kreisform annnehmen. Der entsprechende Quersteg ist dann auf diese Konfiguration ausgelegt.

Weitere Nebenspulen können seitlich der vorderen oder hinteren Nebenspule sowie in den Längsseitenbereichen der Sonde angeordnet werden. Entsprechend können auch weitere Stege, die auch in Richtung der Längsachse liegen können, mit dem Ringkörper verbunden werden.

Die zur Längsachse symmetrischen Längsseitenbereiche der Sonde sind in Abhängigkeit von der Form und der Anzahl der Nebenspulen ausgebildet. Die Längsseitenbereiche sind gerade und parallel zur Längsachse der Sonde.

Die Anzahl und Lage der Stege ist so gewählt, daß die Nebenspulen in oder auf diesen angebracht sind.

Eine bevorzugte Ausführungsform der Erfindung besteht darin, daß der Ringkörper der Sonde ovalförmig ausgebildet ist und nur einen Quersteg, der die Längsachse im Sondenmittelpunkt im rechten Winkel kreuzt, aufweist. Eine der zwei Nebenspulen ist dann in der vorderen Hälfte der Sonde und die andere in der hinteren Hälfte der Sonde angeordnet. Die Form der Nebenspulen kann dabei D-förmig oder kreisförmig ausgebildet sein. Der Krümmungsradius der Bogensegmente an den Stirnseiten des Ringkörpers ist im wesentlichen dem jeweiligen Krümmungsradius des darin angeordneten Nebenspulenbereiches angepaßt und vorteilhafterweise halbkreisförmig.

Die Empfangsqualität des Meßsignales und die Empfindlichkeit der Sonde ist besonders hoch, wenn der Abstand der Nebenspulenzentren in Längsrichtung mindestens der Hälfte des Durchmessers der Hauptspule in Längsrichtung entspricht.

Durch die erfindungsgemäße Anordnung der beiden Nebenspulen in Längsrichtung, wobei Bereiche beider Spulen im Quersteg angeordnet sind, wird ein großer Abstand der beiden Spulenzentren bei relativ kleinen Gesamtmaßen der ringförmigen Sonde erzielt. Die gewünschte Differenzwirkung der Nebenspulen zur Hauptspule wird mit steigendem Abstand der Spulenzentren zueinander verbessert. Hierdurch steigt die Empfindlichkeit und Ortungsreichweite bei verbesserter Kompensation bodenmagnetischer Effekte.

Durch die Anordnung der Empfangsspulen als vordere und rückwärtige Empfangsspule wird auch gewährleistet, daß die Differenzwirkung bei Links-/Rechts-Schwenkbewegungen im wesentlichen konstant bleibt. Diese Schwenkbewegungen sind vor allen Dingen, beim Absuchen eines Geländestreifens mit einem Metallsuchgerät, das aus der Sonde und einem Tragrohr besteht, üblich. Bei einem derartigen Suchverfahren läßt es sich üblicherweise nicht vermeiden, daß die Sonde geringfügig um die Längsachse kippt. Hierdurch gelangt der eine Längsseitenbereich der Sonde näher zum Boden und der andere Längsseitenbereich erfährt einen größeren Abstand vom Boden, so daß eine Signalveränderung eintritt. Es ist daher bei der Anordnung der Empfangsspulen in Längsrichtung von Vorteil, daß bei einer derartigen Schwenkbewegung der Abstand der vorderen Spule zum Boden immer gleich dem Abstand der hinteren Spule zum Boden ist. Zufällige Abstandsänderungen der Sonde zum Boden haben somit gleiche Signalveränderungen in beiden Empfangsspulen zur Folge, was bei gegeneinander geschalteten Empfangsspulen zu einer konstanten Differenzwirkung und damit zu keiner Verfälschung der Meßsignale führt.

Ebenfalls wird durch den relativ großen Abstand der Zentren der Empfangsspulen die störende, gegenseitige Wechselfeldbeeinflussung der Spulen minimiert.

Ein weiterer Vorteil der erfindungsgemäßen Sonde für ein Metallsuchgerät besteht darin, daß die störende Nähe grosser Metallteile bei seitlicher Annäherung der Sonde in gewissen Grenzen kompensiert wird. Dadurch ist es möglich, in der Nähe von Zäunen, Eisenbahnschienen, Leitplanken usw. zu suchen, wenn die Sonde in Längsrichtung des Störers geführt wird.

Die Kompensation der störenden Bodeneffekte, welche insbesondere beim Suchen auf stark mineralisiertem Grund auftreten, wird üblicherweise durch ein Gegeneinanderschalten der Signale der Empfangsspulen bewirkt. Es kann jedoch auch vorgesehen werden, daß jeder Empfangsspule ein Empfangskanal zugeordnet wird, wobei die Signalpegel, z.B. DC/AC oder Phasenwerte, miteinander verglichen werden. Durch dieses Nicht-Gegeneinanderschalten der Meßsignale ergibt sich eine Erhöhung der Ortungsreichweite der Sonde für ein Metallsuchgerät.

Weitere bevorzugte Ausführungsformen der ringförmigen Sonde bestehen darin, daß in der Sonde vier Nebenspulen angeordnet sind, wobei die Sonde entweder einen Längs- und einen Quersteg oder zwei, sich z.B. unter einem spitzen Winkel kreuzende Querstege aufweist. Hierdurch wird die mechanische Stabilität der Sonde verbessert. Mechanische Deformationen durch Stoß- oder Schockbelastungen oder thermischer Verzug können bei einer kreuzartigen Versteifung des Ringkörpers weitgehend vermieden werden, so daß keine störenden elektrischen Modulationen auftreten.

Die Erfindung wird nachfolgend anhand eines schematischen Ausführungsbeispieles näher erläutert.
- Fig. 1: zeigt eine Gesamtansicht einer Sonde von unten, wobei die verwendeten Spulen dargestellt sind;
- Fig. 2: zeigt eine Gesamtansicht der Sonde gemäß Fig. 1 von oben und
- Fig. 3: zeigt die Sonde in Seitenansicht.

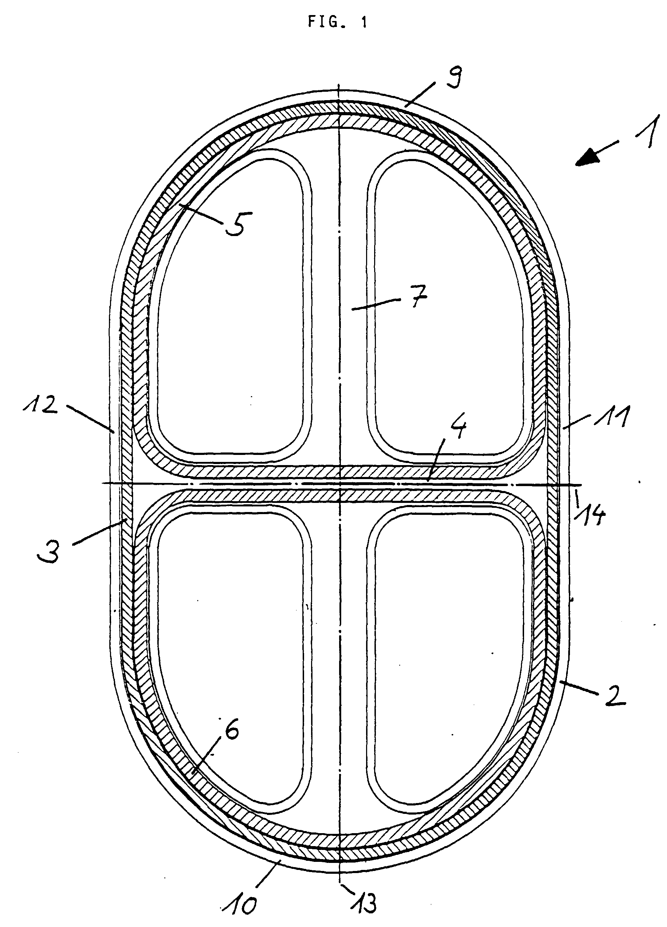

In Fig. 1 ist eine ringförmige Sonde 1 mit einem ovalen Ringkörper 2 und einem sich kreuzenden Quersteg 4 und Längssteg 7, die in den Ringkörper übergehen, dargestellt. Die Stirnseiten 9, 10 des Ringkörpers 2 sind als Bogensegmente ausgebildet und im Beispiel als zwei Halbkreise mit gleichem Krümmungsradius gestaltet. Der Ringkörper 2 hat zwei Längsseitenbereiche 11, 12 die als Geraden parallel zur Längsachse 13 der Sonde 1 ausgebildet sind und die fluchtend in die Bogensegmente 9, 10 münden. Der Längssteg 7 ist symmetrisch und weitgehend parallel zur Längsachse 13 angeordnet und ist mit der Innenseite des Ringkörpers 2 im Bereich der Bogensegmente 9, 10 verbunden. Auch der Quersteg 4 ist symmetrisch und parallel zur Querachse 14 der Sonde 1 ausgebildet und mit der Innenseite des Ringkörpers 2 an den Längsseitenbereichen 11, 12 verbunden. In der Sondenmitte durchdringt der Quersteg 4 den Längssteg 7, wobei der Längssteg 7 eine größere Querschnittsfläche als der Quersteg 4 aufweist. Eine Hauptspule 3 sowie zwei Nebenspulen 5, 6 sind direkt an der Unterseite der ringförmigen Sonde 1 angeordnet. Die Hauptspule 3 besitzt eine Ovalform, die im wesentlichen der Kontur des Ringkörpers 2 folgt. Die Nebenspulen 5, 6 sind innerhalb der Hauptspule 3 angeordnet. Die Nebenspulen 5, 6 weisen etwa D-Form auf, wobei der halbkreisförmige Abschnitt im Bereich der Bogensegmente 9, 10 liegt und die Außenkontur der Nebenspulen 5, 6 in diesem Bereich der Innenkontur der Hauptspule 3 folgt. Das Aneinanderliegen der Nebenspulen 5, 6 an die Hauptspule 3 setzt sich auch in den Längsseitenbereichen 11, 12 des Ringkörpers 2 fort, wobei die Form der Nebenspulen 5, 6 mit einem vorbestimmten Radius in den geraden Teil des Querstegs 4 übergeht. Dieser Übergangsradius der Nebenspulen 5, 6 kann so bestimmt sein, daß dieser dem Radius des Bereiches der Nebenspulen 5, 6, welcher im Bereich der Bogensegmente 9, 10 liegt, entspricht und somit eine Kreis- oder Ovalform der Nebenspulen 5, 6 entsteht.

Der Längssteg 7 hat im Ausführungsbeispiel nur eine Versteifungs- und keine Spulenaufnahmefunktion, wodurch eine höhere Festigkeit des Ringkörpers 2 erreicht wird und somit bei Stößen störende, elektrische Modulationen in den Spulen vermieden werden.

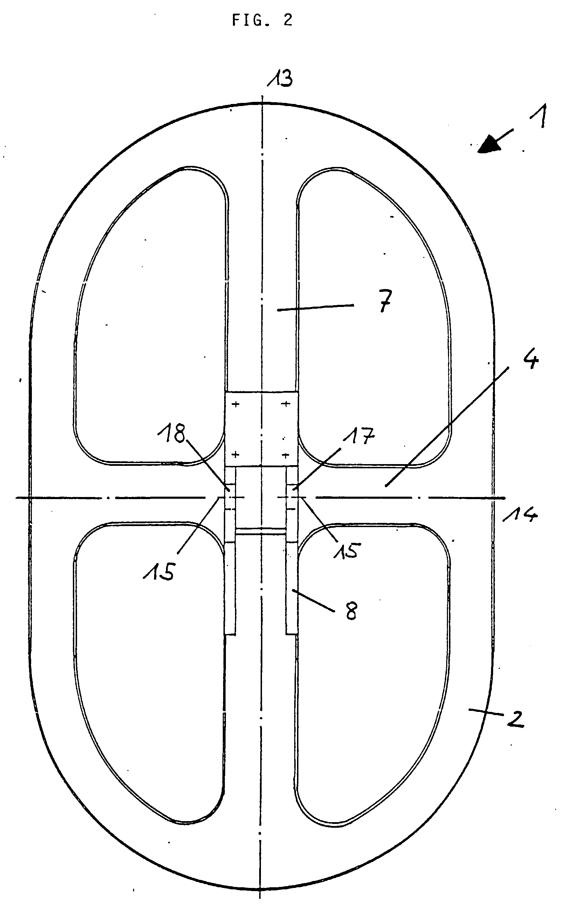

In Fig. 2 wird dieselbe Sonde 1 wie in Fig. 1 in einer Draufsicht dargestellt. Es ist der Zeichnung entnehmbar, daß der Ringkörper 2, der Quersteg 4 und der Längssteg 7 symmetrisch zur Längsachse 13 und zur Querachse 14 der Sonde 1 ausgebildet sind.

Im Bereich über dem Schwerpunkt der Sonde 1 wird ein Halter 8 an der Oberseite der Sonde 1 angeordnet, der zum Befestigen einer Gelenkverbindung dient. Im Halter 8 sind Lagerbereiche 17, 18 mit einer mittigen Achse 15, welche parallel zur Querachse 14 der Sonde 1 verläuft, für einachsige Gelenkverbindung, z.B. einen Drehbolzen, vorgesehen. Über diese Gelenkverbindung ist die Sonde 1 kippbar um die Achse 15 an einer Aufnahmevorrichtung, z.B. ein Tragrohr gelagert. Weitere Funktionskomponenten, insbesondere die Auswertelektronik und Anzeigeelemente können in oder an der Aufnahmevorrichtung vorgesehen sein.

Anstelle der beschriebenen Gelenkverbindung können andere, bekannte Gelenkverbindungen, insbesondere mehrachsige Gelenkverbindungen, z.B. Kardangelenkverbindungen, am Halter 8 angebracht werden.

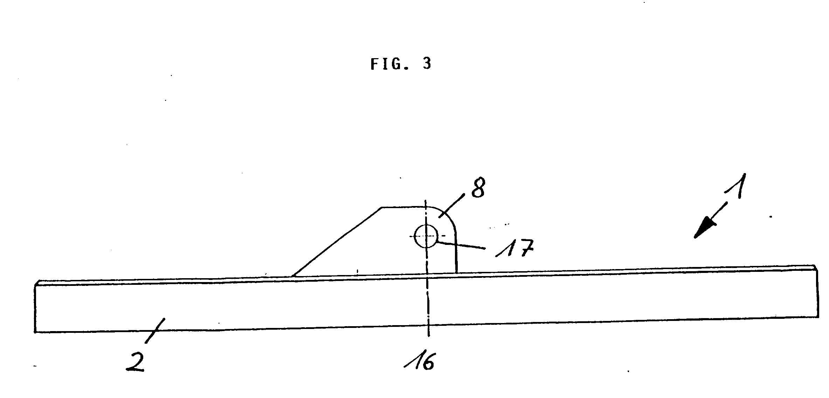

Die Fig. 3 zeigt die Sonde 1 in einer Seitenansicht, wobei der Ringkörper 2 auch symmetrisch zur Vertikalachse 16 der Sonde 1 ausgebildet ist. Die Mittelpunkte der kreisförmig ausgebildeten Lagerbereiche 17, 18 des Halters 8 liegen in der Vertikalebene, welche durch die Vertikalachse 16 und die Querachse 14 der Sonde 1 aufgespannt wird. Hierdurch wird ein kippmomentfreies Anbringen der Sonde 1 an einem Tragrohr ermöglicht.

Der Ringkörper 2 und die Stege 4, 7 können als einteiliges Sondengehäuse aus einem geeigneten Material, insbesondere aus formstabilem Kunststoff ausgebildet werden. Der Halter 8 kann dabei Bestandteil des Sondengehäuses sein oder auch zusätzlich an das Sondengehäuse angebracht werden.

Die auf der Unterseite der Sonde 1 angeordneten Spulen können sowohl in konventioneller Weise in eine U-förmige Nut nebeneinander oder übereinander eingelegt und darin befestigt oder eingegossen werden. Die Spulen 3, 5, 6 können auch in Multi-Layer-Technik und/oder als gedruckte Schaltungen ausgebildet und auf der Unterseite des dann zweckmäßigerweise flachen Ringkörpers 2 und der Stege 4, 7 angeordnet werden.

Die Elektronik und Schaltung eines Metallsuchgerätes, in dem die erfindungsgemäße Sonde eingesetzt wird, kann derart vorgesehen sein, daß die Hauptspule 3 als Sendespule und die Nebenspulen 5, 6 als Empfängerspulen oder die Nebenspulen 5, 6 als Sendespulen und die Hauptspule 3 als Empfangsspule geschaltet werden kann. Weiterhin können die Empfangsspulen als Differenzspulen gegeneinander oder als Verstärkungsspulen miteinander geschaltet sein.

Es kann aber auch vorgesehen werden, daß jeder Empfangsspule ein getrennter Empfangskanal zugeordnet wird, wobei beispielsweise die Differenzwirkung durch einen Vergleich der Signalwerte erzielt wird.

## Patentansprüche

1. Ringförmige Sonde für ein Metallsuchgerät,
mit einer Hauptspule und mindestens zwei Nebenspulen, mit einem Ringkörper, der die Hauptspule aufnimmt, und mit mindestens einem Steg, der gegenüberliegende Bereiche des Ringkörpers verbindet und der Bereiche von Nebenspulen aufnimmt,
dadurch **gekennzeichnet,**
(a) daß der Ringkörper (2) als Ovalring mit einer Längs-Symmetrie-Achse (13) ausgebildet ist,
(b) daß der Ringkörper (2) mindestens zwei Bogensegmente (9, 10) aufweist, deren Scheitelpunkte auf der Längsachse (13) liegen,
(c) daß der Ringkörper (2) gerade Längsseitenbereiche (11, 12) aufweist, die sich zwischen den Bogensegmenten (9, 10) parallel zur Längsachse (13) erstrecken,
(d) daß der Steg als Quersteg (4) zur Längsachse (13) angeordnet ist und die Längsseitenbereiche (11, 12) verbindet und
(e) daß mindestens zwei Nebenspulen (5,6) sich in Längsrichtung der Sonde (1) als vordere bzw. rückwärtige Nebenspule (5, 6) gegenüberliegen und mit einem Spulenbereich im Quersteg (4) angeordnet sind.

2. Ringförmige Sonde nach Anspruch 1,
dadurch **gekennzeichnet,**
daß die Zentren der Nebenspulen (5,6) in Längsrichtung der Sonde (1) einen Abstand aufweisen, der der Hälfte des Durchmessers der Hauptspule (3) in Längsrichtung entspricht.

3. Ringförmige Sonde nach einem der Ansprüche 1 oder 2,
dadurch **gekennzeichnet,**
daß die Hauptspule (3) als Sendespule und die Nebenspulen (5,6) als Empfängerspulen geschaltet sind.

4. Ringförmige Sonde nach einem der Ansprüche 1 bis 3,
dadurch **gekennzeichnet,**
daß die Nebenspulen (5,6) als Differenzspulen geschaltet sind.

5. Ringförmige Sonde nach einem der Ansprüche 1 bis 4,
dadurch **gekennzeichnet,**
daß die Spulen (3,5,6) in Multilayer-Technik und/oder als gedruckte Schaltungen ausgebildet sind, daß
die Spulen (3,5,6) im Ringkörper (2) und den Stegen (4,7) in einer Ebene nebeneinander oder übereinander liegend vorgesehen sind, und daß der Ringkörper (2) und die Stege (4, 7) ein einteiliges Sondengehäuse bilden, und daß die Sonde (1) an ihrer Oberseite einen Halter (8) zur Befestigung einer Gelenkverbindung aufweist.

6. Ringförmige Sonde nach einem der Ansprüche 1, 2 und 5,
dadurch **gekennzeichnet,**
daß die Nebenspulen (5,6) als Sendespulen und die Hauptspule (3) als Empfangsspule geschaltet sind.

7. Ringförmige Sonde nach einem der Ansprüche 1 bis 6,
dadurch **gekennzeichnet,**
daß bei einer Sonde (1) mit zwei Nebenspulen (5,6) die Länge der ringförmigen Sonde (1) etwa der zweifachen Breite entspricht.

8. Ringförmige Sonde nach einem der Ansprüche 1 bis 7,
dadurch **gekennzeichnet,**
daß die Sonde (1) einen Quersteg (4) und einen Längssteg (7) aufweist, und daß Ringkörper (2), Stege (4, 7) und Spulen (3, 5, 6) symmetrisch zur Längsachse (13) und Querachse (14) ausgebildet sind.

9. Ringförmige Sonde nach einem der Ansprüche 1 bis 8,
dadurch **gekennzeichnet,**
daß die Nebenspulen (5, 6) nahezu kreisringförmig ausgebildet sind.

10. Ringförmige Sonde nach einem der Ansprüche 1 bis 9,
dadurch **gekennzeichnet,**
daß ein Tragrohr für Schwenkbewegungen nach links und rechts bezüglich der vorderen und rückwärtigen Nebenspulen (5, 6) angeordnet ist.

## Claims

1. Annular probe for a metal detecting device having a main coil and at least two ancillary coils, having an annular body, which accepts the main coil, and having at least one web, which connects the adjacent zones of the annular body and accommodates the zones of ancillary coils,
characterised in that
(a) the annular body (2) is designed as an oval ring having a longitudinal symmetrical axis (13),
(b) the annular body (2) features at least two arced segments (9, 10), the vertexes of which lie upon the longitudinal axis (13),
(c) the annular body (2) features straight longitudinal side zones (11, 12), which extend between the arced segments (9, 10) parallel to the longitudinal axis (13),
(d) the web is arranged as a cross web (4) to the longitudinal axis (13) and connect the longitudinal side zones (11, 12) and
(e) at least two ancillary coils (5, 6) lie adjacent in longitudinal direction of the probe (1) to each other as front respectively rear ancillary coil (5, 6) and are arranged in the cross web (4) with a coil zone.

2. Annular probe according to claim 1,
characterised in that in longitudinal direction of the probe (1) the centres of the ancillary coils (5, 6) are at a distance, which corresponds to half the diameter of the main coil (3) in longitudinal direction.

3. Annular probe according to one of the claims 1 or 2,
characterised in that
the main coil (3) is wired as a transmitter coil and the ancillary coils (5, 6) are wired as receiver coils.

4. Annular probe according to any of the claims 1 to 3,
characterised in that
the ancillary coils (5, 6) are wired as differential coils.

5. Annular probe according to any of the claims 1 to 4,
characterised in that
the coils (3, 5, 6) are designed in multilayer technique and / or as printed circuits, that the coils (3, 5, 6) in the annular body (2) and the webs (4, 7) are provided in a plane next to each other or lying one above the other, and that the annular body (2) and the webs (4, 7) form a single part probe casing, and that the probe (1) features a holder (8) on its top side for attaching a link connection.

6. Annular probe according any of the claims 1, 2 and 5,
characterised in that
the ancillary coils (5, 6) are wired as transmitter coils and the main coil (3) wired as a receiver coil.

7. Annular probe according to any of the claims 1 to 6,
characterised in that
for a probe (1) having two ancillary coils (5, 6) the length of the annular sonde (1) corresponds approximately to twice the width.

8. Annular probe according to any of the claims 1 to 7,
characterised in that
the probe (1) features a cross web (4) and a longitudinal web (7), and that the annular body (2), the webs (4, 7) and the coils (3, 5, 6) are designed symmetrical to the longitudinal axis (13) and the transverse axis (14).

9. Annular probe according to any of the claims 1 to 8,
characterised in that
the ancillary coils (5, 6) are designed virtually circular in form.

10. Annular probe according to any of the claims 1 to 9,
characterised in that
a carrier tube for pivotal motions to the left and to the right is arranged in relation to the front and rear ancillary coils (5, 6).

## Revendications

1. Sonde annulaire pour un détecteur de métal, avec une bobine principale et au moins deux bobines secondaires, avec un corps annulaire qui reçoit la bobine principale, avec au moins une cloison qui relie des zones en vis-à-vis du corps annulaire et reçoit des parties des bobines secondaires, caractérisé par le fait
a) que le corps (2) annulaire a la forme d'un anneau ovale avec un axe (13) de symétrie longitudinal,
b) que le corps annulaire (2) présente au moins deux segments circulaires (9,10) dont les sommets sont situés sur l'axe longitudinal (13),
c) que le corps (2) annulaire présente des zones de grands côtés rectilignes qui s'étendent entre les segments circulaires (9, 10), parallèlement à l'axe longitudinal (13),
d) que la cloison est disposée transversalement à l'axe (13) longitudinal en tant que cloison transversale (4) et relie les zones de grands côtés (11, 12) et
e) qu'au moins deux bobines secondaires (5,6) disposées en vis-à-vis dans la direction longitudinale de la sonde (1), en tant que bobines secondaires avant et arrière (5,6), avec une partie de bobine située dans la cloison transversale (4).

2. Sonde annulaire selon la revendication 1, caractérisée par le fait que les centres des bobines secondaires (5,6) sont éloignés l'un de l'autre dans la direction longitudinale de la sonde (1) d'une distance qui correspond à la moitié du diamètre de la bobine principale (3) dans la direction principale.

3. Sonde annulaire selon une des revendications 1 ou 2, caractérisée par le fait que la bobine principale (3) est branchée en bobine émettrice et les bobines secondaires (5,6) en bobines réceptrices.

4. Sonde annulaire selon une des revendications 1 à 3, caractérisée par le fait que les bobines secondaires (5,6) sont branchées en bobines différentielles.

5. Sonde annulaire selon une des revendications 1 à 4, caractérisée par le fait que les bobines (3,5,6) sont réalisées selon la technique des couches multiples et/ou sous forme de circuits imprimés, que les bobines (3,5,6) sont disposées côte à côte dans un plan ou l'une au-dessus de l'autre dans le corps annulaire (2) et dans les cloisons (4,7) et que le corps annulaire (2) et les closions (4,7) forment un boîtier de sonde monobloc et que la sonde (1) comporte sur sa face supérieure un moyen de fixation (8) pour la fixation à un joint articulé.

6. Sonde annulaire selon une des revendications 1, 2 et 5, caractérisée par le fait que les bobines secondaires (5,6) sont branchées en bobines émettrices et la bobine principale (3) en bobine réceptrice.

7. Sonde annulaire selon une des revendications 1 à 6, caractérisée par le fait que, dans une sonde (1) avec deux bobines secondaires (5,6), la longueur de la sonde (1) annulaire correspond sensiblement au double de sa largeur.

8. Sonde annulaire selon une des revendications 1 à 7, caractérisée par le fait que la sonde (1) comporte une cloison (4) transversale et une cloison (7) longitudinale et que le corps annulaire (2), les cloisons (4,7) et les bobines (3,5,6) sont symétriques par rapport à l'axe (13) longitudinal et à l'axe (14) transversal.

9. Sonde annulaire selon une des revendications 1 à 8, caractérisée par le fait que les bobines secondaires (5,6) ont sensiblement une forme d'anneau circulaire.

10. Sonde annulaire selon une des revendications 1 à 9, caractérisée par le fait qu'il est prévu un tube support pour des pivotements vers la gauche et vers la droite par rapport aux bobines secondaires (5,6) avant et arrière.
